# EUROPEAN PATENT SPECIFICATION

(11) **EP 4 193 826 B1**
(45) Date of publication and mention of the grant of the patent: **31.07.2024**
(21) Application number: 22209427.8
(22) Date of filing: 24.11.2022
(51) Int. Cl.: A01F 15/07, B65B 41/12

(54) **BALING APPARATUS**
BALLENPRESSVORRICHTUNG
APPAREIL DE MISE EN BALLES

(30) Priority: 13.12.2021 GB 202117949
(43) Date of publication of application: 14.06.2023
(73) Proprietor: AGCO International GmbH, 8212 Neuhausen am Rheinfall (CH)
(72) Inventor: SCHLICHTING, Malte Cornelius, 38304 Wolfenbüttel (DE)
(74) Representative: AGCO Intellectual Property Department

(56) References cited:
- EP-A1- 1 917 849
- GB-A- 2 475 849
- US-A1- 2015 296 715

## Description

### FIELD OF THE INVENTION

The present invention relates to an agricultural baling apparatus of the kind used to pick up harvested crop, such as dry hay or cut grass or alfalfa and create cylindrical, so called round, bales. In particular, it relates to an apparatus for the automated loading of wrapping material within such an apparatus.

### BACKGROUND

Various kinds of agricultural baling apparatus are known in which a wrapping material, stored in a reservoir, is fed through a feed apparatus prior to being inserted into a baling chamber of the baling apparatus in order to bind or wrap a harvested crop that has been formed into a cylindrical bale within the baling chamber.

It is known for such baling apparatus to carry more than one kind of wrapping material. This allows an operator to bale a variety of harvested crops that require different kinds of wrapping or wrapping without returning to an on site store. For example, dry hay may readily be wrapped with netwrap. However, high moisture bales typically require either film wrap or a combination of netwrap and film wrap. However, in moving from a first field requiring a first kind of wrapping material to wrap a first harvested crop to a second field requiring a second kind of wrapping material to wrap a second harvested crop, an operator will need to remove a first kind of wrapping material from the baling apparatus and install a second kind of wrapping material into the baling apparatus. This can be a labour intensive and time consuming task.

It has been suggested to provide a wrapping material storage system in which a number of supports are provided that may be indexed about a central support axis. In this way multiple rolls of wrapping material are provided in the wrapping material storage system in a suitable location such that an operator does not need to manoeuvre a fresh roll of wrapping material from a separate storage location on the baler and load it into the operating position. Instead, the wrapping material storage system may be loaded with multiple rolls of wrapping material prior to baling and when a fresh roll of wrapping material is required in the delivery position the operator need only index the support apparatus about the central support axis in order to locate a fresh roll of wrapping material into the delivery position.

An example of such a wrapping material storage system is known from US2015/0296715 (CNH).

However, even if the wrapping material storage system is loaded with multiple kinds of wrapping material, if it is desired to change the type of wrapping material used by the operator, it will still be necessary for an operator to stop the baler, index the wrapping material storage system such that the replacement wrapping material is in the correct position and then introduce the replacement wrapping material into the baler before baling with the replacement wrapping material can commence.

It is desired to provide a baling apparatus in which more than one wrapping material may be ready to be used without such intervention from an operator of the baling apparatus.

It is an advantage of the present invention that this problem is addressed.

### SUMMARY OF THE INVENTION

According to a first aspect of the present invention, an apparatus for the automated loading of wrapping material in an agricultural baling apparatus, comprises a reservoir housing three rolls of wrapping material, at least two of the rolls being of differing wrapping material, each roll of wrapping material having a leading end forming a gathered string,
a support with a retention notch for each gathered string of wrapping material, each gathered string of wrapping material being located,
a pair of opposing feed rollers,
a severing apparatus to provide a severing location downstream of the feed rollers, and
a gathering apparatus located between the reservoir and the pair of feed rollers, the gathering apparatus being adapted to gather side edges of a wrapping material to form each string of gathered wrapping material in an associated retention notch; characterised in that
the automated loading apparatus further comprises a displacement apparatus configured to move the gathered string between a first position in which the gathered string is located at least in part within an associated retention notch and a second position in which the gathered string is located at least in part in contact with the feed rollers.

Preferably, the reservoir comprises a wrapping material storage system in which a number of wrapping material supports are provided adapted to be indexed about a central support axis.

Preferably the support comprises a frame element of the baling apparatus.

Preferably the support comprises a side frame of the wrapping material storage system.

### BRIEF DESCRIPTION OF THE DRAWINGS

The invention will now be described, by way of example only, with reference to the accompanying drawings, in which:
Figure 1 shows a schematic perspective view of elements of the baling apparatus of the present invention; and
Figure 2 shows a schematic view of elements of the baling apparatus of the present invention.

### DETAILED DESCRIPTION OF SPECIFIC EMBODIMENTS OF THE INVENTION

The invention will now be described in the following detailed description with reference to the drawings, wherein preferred embodiments are described in detail to enable practice of the invention. Although the invention is described with reference to these specific preferred embodiments, it will be understood that the invention is not limited to these preferred embodiments. But to the contrary, the invention includes numerous alternatives, modifications and equivalents as will become apparent from consideration of the following detailed description.

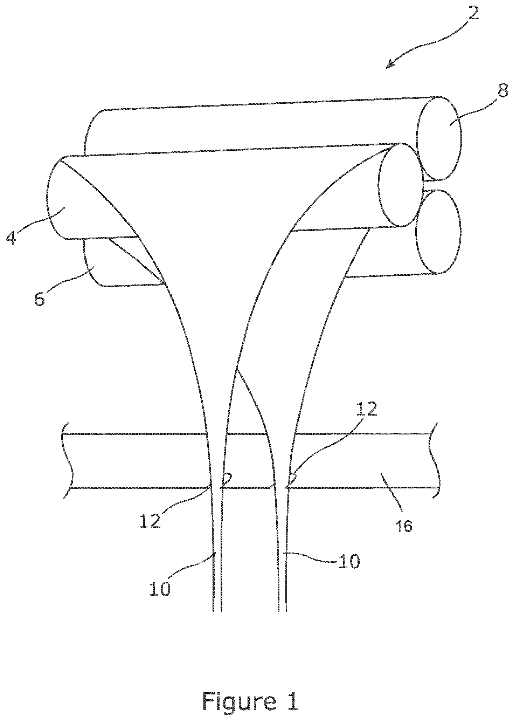

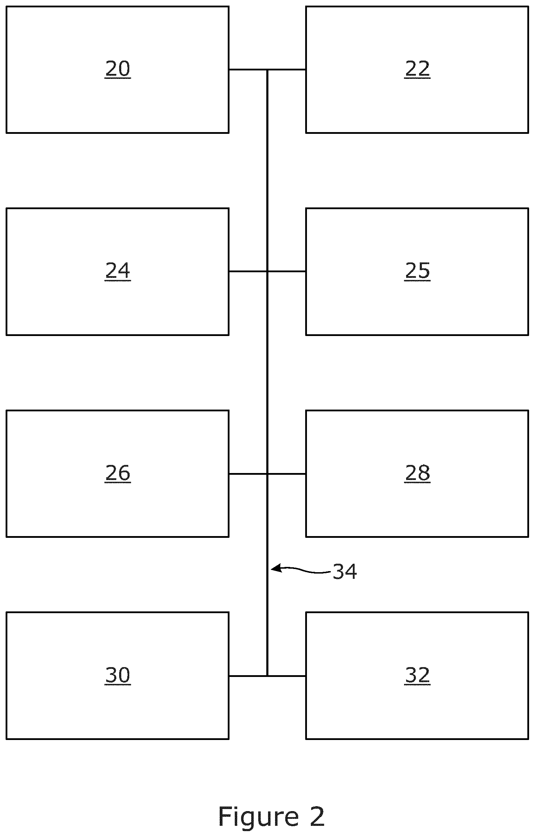

With reference to Figures 1 and 2, elements of an automated loading system for an agricultural baling apparatus in accordance with the present invention are shown. The baling apparatus conveniently forms part of an agricultural baler adapted to be towed by an agricultural vehicle, such as a tractor.

A reservoir 2 housing first, second and third rolls of wrapping material 4,6,8 is shown in Figure 1. At least two of the rolls are of differing kinds of wrapping material, for example a first may be netwrap and a second may be plastics film. In the illustrated embodiment the first and second rolls 4,6 are of differing kinds of wrapping material.

The reservoir 2 may conveniently comprise a wrapping material storage system in which a number of wrapping material supports are provided adapted to be indexed about a central support axis. Each roll of wrapping material 4,6,8 is located on an associated support. A drive mechanism 30 is provided for indexing the wrapping material supports. Each roll of wrapping material has a leading edge.

When initially loading each roll of wrapping material an operator pays out the leading edge of the wrapping material and gathers the leading edge of the wrapping material to form a rope or gathered string 10 of wrapping material. The operator then inserts the gathered string of wrapping material into a suitable slot or retention notch 12, formed in a suitable support 16.

In Figure 1, the support 16 is shown as a frame element of the baler located beneath the reservoir with two retention notches 12. However, the support 16 may be located in any suitable location and, for example, may be formed in the side frame of the wrapping material storage system. In such an arrangement, each retention notch 12 may be formed adjacent the respective roll of wrapping material.

A pair of feed rollers are provided adjacent a wrapping material inlet of a baling chamber (not shown). The feed rollers are operated by a drive mechanism 22 actuated by a control unit 20 normally to rotate the feed rollers in a feed direction so as, when the leading edge of the wrapping material is caught by the pair of rotating feed rollers, draws the wrapping material from the reservoir and into the baling chamber.

The feed apparatus further comprises a displacement apparatus configured to move the gathered string between a first position in which the gathered string is located at least in part within its retention notch 12 and a second position in which the gathered string is located at least in part in contact with the pair of feed rollers.

In a preferred arrangement the displacement apparatus comprises a moveable arm with a grabbing device. Drive mechanisms 24,25 are provided to control movement of the movable arm and operation of the grabbing device. These drive mechanisms 24,25 are actuated by the control unit 20.

A severing apparatus is provided at a severing location downstream of the feed rollers. A drive mechanism 26 for the severing apparatus is actuated by the control unit 20 to cause severing of the wrapping material once the formed bale has been sufficiently wrapped.

A gathering apparatus is provided between the reservoir and the pair of feed rollers. On actuation of a drive mechanism 28 for the gathering apparatus by the control unit 20, the side edges of the wrapping material are gathered together to form a string of the wrapping material. It will be understood that where the wrapping material is a film wrapping material the gathering apparatus 28 will be actuated toward the end of each wrapping operation as is usual in wrapping of bales with a film wrapping material. In this way, when wrapping with a film wrapping material a string of wrapping material is reformed at the end of each baling operation.

The control unit 20 is in electronic communication with the various drive mechanisms 22,24,25,26,28,30 by way of a suitable network 34 in order to control operation of the loading of the wrapping material.

Prior to commencement of a wrapping operation all of the strings 10 of wrapping material are located in their respective notches. In order for wrapping to commence, the drive mechanisms 24,25 of the displacement apparatus are actuated to grab an appropriate string of wrapping material and remove it from its retention notch 12. The string of wrapping material is then moved such that a leading edge of the string of wrapping material contacts the pair of feed rollers. Actuation of the feed roller drive mechanism 22 then causes the wrapping material to be drawn from the reservoir and into the baling chamber.

As the wrapping material is drawn into the baling chamber the edges of the wrapping material move apart such that wrapping material will flow evenly from the reservoir through the pair of feed rollers to the baling chamber.

Once the bale has been sufficiently wrapped the drive mechanism 26 of the severing mechanism is actuated to sever the wrapping material.

If the operator wishes to continue wrapping with the current wrapping material, no further changes are required.

If a wrapping material roll is exhausted (this may be detected by a suitable sensor in communication with the control unit), the control unit 20 is actuated to cause the wrapping material support system to be indexed such that a fresh roll of wrapping material is in a suitable location to allow for the string of wrapping material to be removed from its retention notch 12 and guided towards the pair of feed rollers.

If an operator desires to wrap a bale in a different wrapping material, this may be communicated to the control unit 20, for example by way of a user input device 30 in communication with the control unit 20. The user input device 30 may conveniently take the form of a user terminal within the agricultural vehicle used to tow the baler.

If the current wrapping material is a film wrapping material, the drive mechanism 22 of the pair of feed rollers is reversed, freeing the string of wrapping material so that it may be grabbed by the displacement apparatus and returned to a suitable retention notch 12.

If the current wrapping material is a netwrap wrapping material, the control unit 20 actuates the drive mechanism 28 of the gathering apparatus in order to draw the sides of the wrapping material together to form a string. The drive mechanisms 24,25 of the displacement apparatus are actuated to grab the string of wrapping material and direct the string of wrapping material to a suitable retention notch 12.

If the operator knows which is to be the final bale using netwrap, the gathering device may be actuated during the final baling. Alternatively, the gathering apparatus can be actuated to draw the netwrap wrapping material into a string while the baler is inactive. Once the netwrap has been drawn into a string the control unit 20 actuates the drive mechanism 22 of the pair of feed rollers to reverse and so free the string of netwrap wrapping material from the pair of feed rollers before the displacement apparatus is actuated to move the string of gathered netwrap wrapping material to the relevant retention notch 12.

The control unit 20 then causes the wrapping material support system to be indexed such that a string of the desired wrapping material is in a position to be grabbed and guided towards the pair of feed rollers.

The drive mechanisms 24,25 of the displacement apparatus are then once again actuated to grab the string of wrapping material and deliver the string of desired wrapping material to the pair of feed rollers.

From reading the present disclosure, other modifications will be apparent to persons skilled in the art. Such modifications may involve other features which are already known in the field of baling apparatus and component parts therefore and which may be used instead of or in addition to features already described herein.

## Claims

1. An apparatus for the automated loading of wrapping material in an agricultural baling apparatus, comprises
a reservoir (2) housing three rolls of wrapping material (4,6,8), at least two of the rolls being of differing wrapping material (4,6,8), each roll of wrapping material (4,6,8) having a leading end forming a gathered string (10),
a support (16) with a retention notch (12) for each gathered string (10) of wrapping material, each gathered string (10) of wrapping material being located in an associated retention notch (12),
a pair of opposing feed rollers,
a severing apparatus to provide a severing location downstream of the feed rollers, and
a gathering apparatus located between the reservoir and the pair of feed rollers, the gathering apparatus being adapted to gather side edges of a wrapping material to form each string (10) of gathered wrapping material;
**characterised in that**
the automated loading apparatus further comprises a displacement apparatus configured to move the gathered string (10) between a first position in which the gathered string (10) is located at least in part within the associated retention notch (12) and a second position in which the gathered string (10) is located at least in part in contact with the feed rollers.

2. An apparatus according to claim 1, **characterised in that** the reservoir (2) comprises a wrapping material storage system in which a plurality of wrapping material supports are provided adapted to be indexed about a central support axis.

3. An apparatus according to claim 1 or claim 2, **characterised in that** the support (16) comprises a frame element of the baling apparatus.

4. An apparatus according to any of claim 2 or clam 3, **characterised in that** the support (16) comprises a side frame of the wrapping material storage system.

## Patentansprüche

1. Einrichtung zum automatischen Laden eines Umhüllungsmaterials in eine landwirtschaftliche Balleneinrichtung mit
einem Behälter (2), der drei Rollen mit Umhüllungsmaterial (4, 6, 8) aufnimmt, wobei mindestens zwei der Rollen unterschiedliche Umhüllungsmaterialien (4, 6, 8) aufweisen, wobei jede Rolle des Umhüllungsmaterials (4, 6, 8) ein vorderes Ende aufweist, welches einen gesammelten oder zusammengerafften Streifen (10) aufweist,
einem Träger (16) mit einer Halteausnehmung (12) für jeden gesammelten oder zusammengerafften Streifen (10) des Umhüllungsmaterials, wobei jeder gesammelte oder zusammengeraffte Streifen (10) des Umhüllungsmaterials in einer zugeordneten Halteausnehmung (12) angeordnet ist,
einem Paar gegenüberliegender Zuführrollen,
einer Trenneinrichtung zur Bereitstellung einer Trennstelle stromabwärts der Zuführrollen, und einer Einrichtung zum Sammeln oder Zusammenraffen, die zwischen dem Behälter und dem Paar der Zuführrollen angeordnet ist, wobei die Einrichtung zum Sammeln oder Zusammenraffen geeignet angepasst oder gestaltet ist zum Sammeln oder Zusammenraffen von Seitenkanten des Umhüllungsmaterials zwecks Bildung jedes Streifens (10) des gesammelten oder zusammengerafften Materials;
**dadurch gekennzeichnet, dass**
die automatische Ladeeinrichtung des Weiteren eine Verlagerungseinrichtung aufweist, die geeignet konfiguriert ist, um den gesammelten oder zusammengerafften Streifen (10) zwischen einer ersten Position, in der der gesammelte oder zusammengerafften Streifen (10) zumindest teilweise in der zugeordneten Halteausnehmung (12) angeordnet ist, und einer zweiten Position, in der der gesammelte oder zusammengeraffte Streifen (10) zumindest teilweise in Kontakt mit den Zuführrollen angeordnet ist, zu bewegen.

2. Einrichtung nach Anspruch 1, **dadurch gekennzeichnet, dass** der Behälter (2) ein Speichersystem für Umhüllungsmaterial aufweist, in dem mehrere Träger für Umhüllungsmaterial vorgesehen sind, die geeignet angepasst oder ausgebildet sind für eine Indexierung hinsichtlich einer zentralen Tragachse.

3. Einrichtung nach Anspruch 1 oder 2, **dadurch gekennzeichnet, dass** der Träger (16) ein Rahmenelement der Balleneinrichtung aufweist.

4. Einrichtung nach einem der Ansprüche 2 oder 3, **dadurch gekennzeichnet, dass** der Träger (16) einen Seitenrahmen des Speichersystems für das Umhüllungsmaterial aufweist.

## Revendications

1. Dispositif de chargement automatique de matériau d'emballage sur un dispositif de formation de balle agricole, comprenant
un réservoir (2) contenant trois rouleaux de matériau d'emballage (4, 6, 8), au moins deux des rouleaux comportant un matériau d'emballage différent (4, 6, 8), chaque rouleau de matériau d'emballage (4, 6, 8) présentant une extrémité avant formant un cordon froncé (10),
un support (16) avec une encoche de retenue (12) pour chaque cordon froncé (10) de matériau d'emballage, chaque cordon froncé (10) de matériau d'emballage étant situé dans une encoche de retenue (12) associée,
une paire de rouleaux d'alimentation opposés,
un dispositif de coupe destiné à former un emplacement de coupe en aval des rouleaux d'alimentation, et
un dispositif de regroupement situé entre le réservoir et la paire de rouleaux d'alimentation, le dispositif de regroupement étant adapté de manière à regrouper les bords latéraux d'un matériau d'emballage afin de former chaque cordon (10) de matériau d'emballage froncé ;
**caractérisé en ce que**
le dispositif de chargement automatique comprend, en outre, un dispositif de déplacement configuré de manière à déplacer le cordon froncé (10) entre une première position dans laquelle le cordon froncé (10) est situé au moins en partie à l'intérieur de l'encoche de retenue associée (12) et une seconde position dans laquelle le cordon froncé (10) est situé au moins en partie en contact avec les rouleaux d'alimentation.

2. Dispositif selon la revendication 1, **caractérisé en ce que** le réservoir (2) comprend un dispositif de stockage de matériau d'emballage dans lequel une pluralité de supports de matériau d'emballage sont agencés, adapté de manière à être indexé autour d'un axe de support central.

3. Dispositif selon la revendication 1 ou 2, **caractérisé en ce que** le support (16) comprend un élément de structure du dispositif de formation de balle.

4. Dispositif selon l'une quelconque des revendications 2 ou 3, **caractérisé en ce que** le support (16) comprend une structure latérale du dispositif de stockage de matériau d'emballage.
